# EUROPEAN PATENT APPLICATION

(11) **EP 2 242 261 A1**
(43) Date of publication of application: **20.10.2010**
(21) Application number: 10160168.0
(22) Date of filing: 16.04.2010
(51) Int. Cl.: H04N 5/445, H04L 12/58

(54) **Communication device and system**

(30) Priority: 16.04.2009 GB 0906539
(71) Applicant: Wood, Thomas Ryan, Clifton, Bristol BS8 4EJ (GB)
(72) Inventor: Wood, Thomas Ryan, Clifton, Bristol BS8 4EJ (GB)
(74) Representative: Lessard, Jason Donat

(57) **Abstract**

A communication system (10) includes a television (32) for receiving and displaying television signals (64) received over a first communication link (14) and a server (20) located within a computer network. The server (20) is arranged to receive a message and to control onward transmission of the message over a second communication link (42) distinct from the first communication link (14). A set-top box (40), coupled to the television (32), is arranged to receive the message over the second communication link (42). The set-top box (40) includes a decoder (44) for decoding the message and an alert generator for generating on the television an alert (60) indicating the arrival of the message. The alert is independent both of information content in the received television signals (14) and operational control of the television in displaying television services (64). The set top box is therefore operation to target the social habits of particularly the elderly and infirm by providing a more time effective way to interact with relatives who live remotely from other family members, but who have access to conventional television services.

## Description

### Background to the Invention

This invention relates, in general, to a communication device and system and is particularly, but not exclusively, applicable to a messaging system arranged to relay information to elderly or infirm people.

### Summary of the Prior Art

Internet connectivity and particularly e-mail provides an effective (and often interactive) form of communication. In the recent past, web-blogs, web-sites and social-networking sites (such as Facebook, Bebo) have become a prevalent way for an individual to voice their opinions and/or to provide information about themselves and/or pictures to a host of networked individuals (either known or unknown to the site owner). Such sites may require some form of user authentication to protect any potentially sensitive data about the individual.

To access the internet, however, one requires either access to a computer or use of, for example, a web-enabled PDA, 3G-cellular telephone or the like. Generally, the use of these technologies requires a certain degree of technical understanding to invoke the various interfaces and functions and requires a certain amount of finger dexterity and physical coordination.

Furthermore, with specific reference to the use of PDAs and cell phones, their graphic user interface (GUI) are generally small and therefore limit the amount of discernable information that can be displayed at any one time. Also, the portable nature of cell phones means that their associated keypads are small and individual keys are sometimes difficult to depress. Voice recognition software has been developed to obviate the need for keypad entry, but voice dialling (e.g. through a Bluetooth connection) is often subject to error because of varying clarity in the enunciated instruction and ambient noise. This input method also requires a level of technical understanding which may be above that of the elderly and infirm.

For many years, terrestrial television transmissions have also supported the delivery of teletext pages alongside conventional television programmes. These pages are selectively viewable on a television set and may be stored locally to improve access time. Such teletext pages, which are channel dependent, can be overlaid over an active television programme.

More recently, terrestrial television services have been augmented or surpassed by optical subscription or satellite TV services that require the use of supplementary "set-top boxes" to decode signals. These newer TV services also provide a degree of subscriber interactive use through the provision of a limited uplink path. Specifically, by using an optical or a wireline modem, interactive services permit a subscriber to order and then view additional content or channels, e.g. a pay-per-view sports channel.

In terms of access, remote controllers for TVs and set-top boxes have been designed to include function specific keys and colour-coded action keys that, when depressed, are decoded at the set-top box as a direct instruction and/or a page reference. For example, upon pressing the "text" button on the remote controller, the set-top box causes the television always to turn on (i.e. decode and present) an image of the default teletext home page for a particular channel on its screen or, sometimes, to mix/overlay the teletext pages over active TV programmes. Conversely, the functions of these colour-coded keys are generally cascaded through different levels of information, so the same colour-coded key can invoke different functional responses in the set-top box depending upon an operational layer that is currently presented by the set-top box. As one example, in a teletext mode the red button might cause teletext page 100 to be displayed, whereas the same button might confirm the order for a film if it is depressed in an interactive TV mode.

From a demographics perspective (particularly in advanced market economies), population ageing will continue with accelerating pace in the next decades and a growing number of people will spend an increasing number of years living alone. Both trends will require some considerable societal adaptations regarding work, family life and social protection. It has been stated that if active ageing is to be pursued as a coherent public policy with a view to enhancing the social role and the capacity for autonomy in old age, as well as the quality of life of all citizens in ageing societies, the reinforcement of the mediating role of the state, rather than the disengagement of public authorities, may be a desirable way forward towards more population-friendly policies and practices. One practical effect is that free time increases in old age due to the disengagement from paid work. Indeed, it is anticipated that duty-free years in retirement could enhance social relations both within family and in the community. In fact, research shows that the increased free time after retirement is partly devoted to social leisure. However, the bulk of time is allocated to home-centred passive pursuits, especially TV watching and rest.

Putting these statements into perspective, 80% of over 65 year-olds are estimated to spend their time at home; this number increase to 90% for over 85 year olds. 41% of people aged 65 to 74 and 20% of people aged 75 and over used the internet in 2007, compared to 71% of the overall population and (in 2006) only 45% of people aged 50 or over had used a computer in the previous three months compared to 87% of people aged 16 to 30. And in 2006, 21 % of men and 31 % of women aged 65 to 74 lived alone in 2006 and 32% of men and 61% of women aged 75 and over lived alone.

In summary, people are living longer, a significant number of older people live alone, a significant number of older people do not have access to the internet and it is socially important to provide social stimulus and support to these individuals to provide a meaningful quality of life and maintain a connection to their often geographically dispersed families.

### Summary of the Invention

According to a first aspect of the invention there is provided a communication system including: a television for receiving and displaying television signals received over a first communication link; a server located within a computer network, the server arranged to receive a message and to control onward transmission of the message over a second communication link distinct from the first communication link; and a set-top box coupled to the television and arranged to receive the message over the second communication link, the set-top box including: a decoder for decoding the message; and an alert generator for generating on the television an alert indicating the arrival of the message, wherein the alert is independent both of information content in the received television signals and operational control of the television in displaying television services.

In a preferred embodiment, the set-top box is arranged to display the alert simultaneously with the received television signal. Generally, the messages provide access to media content unrelated to the received television signals.

Preferably, the alert further indicates a type of media content present in the message with the set-top box being arranged to render the alert selectable to permit the viewing of data associated with the message.

In a second aspect of the present invention there is provided a television and set-top box combination, the television arranged to receive and display television signals from a television network and wherein the set-top box includes: a first interface providing signals to the television for display on the television; a second interface coupled, in use, to a communication network distinct to the television network, the communication network supporting the transmission of messages to the set-top box; a decoder for decoding the messages; and an alert generator for generating on the television an alert indicating the arrival of messages, wherein the alert is independent of information content in the received television signals.

The present invention therefore provides a communication system that is targeted to the social habits of particularly the elderly and infirm and, as such, it provides a more time effective way to interact with relatives who live remotely from other family members. The system of the present invention supports greater social interaction by providing easier access to recorded events, such as those captured by digital photography or relayed via a short textual message, at a time shortly after the recorded event occurred.

### Brief Description of the Drawings

Exemplary embodiments of the present invention will now be described with reference to the accompanying drawings, in which:
FIG. 1 is a representation of a communication environment according to a preferred embodiment of the present invention; and
FIG. 2 is a schematic representation of a television interface and image presented in accordance with a preferred embodiment, the television interface and image acquired on a television within FIG. 1.

### Detailed Description of a Preferred Embodiment

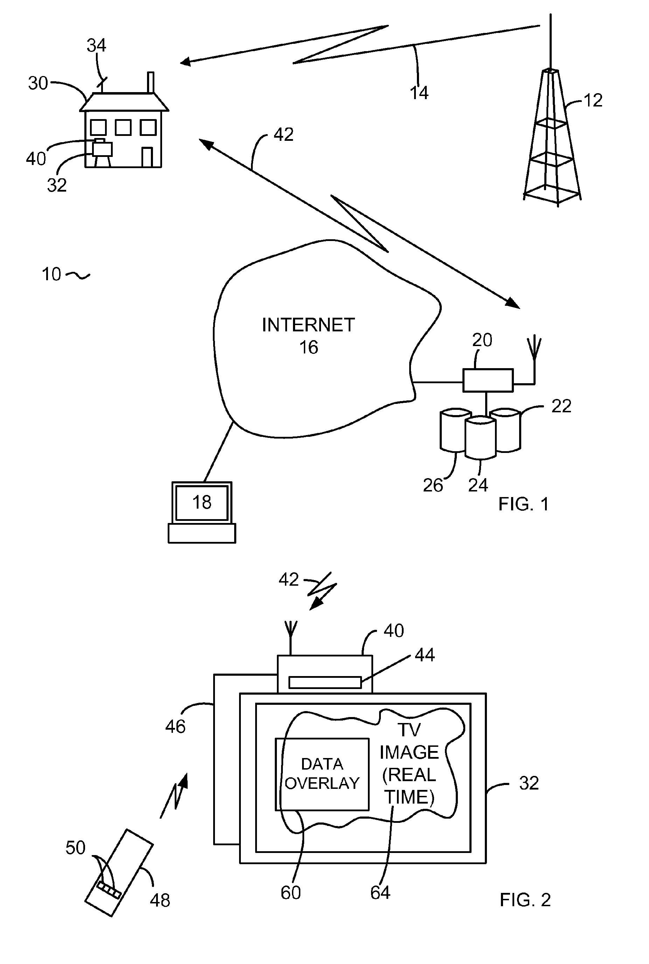

Referring to FIG. 1, there is shown a representation of a communication environment 10 according to a preferred embodiment of the present invention. Essentially, the communication environment 10 contains a conventional television system 12 for broadcasting television signals 14 and a computer-based system 16, such as a packet-switched internet-based system, that is accessible from a computer 18 (or the like). The television system 12 is shown as a ground-based, terrestrial system, although it could equally be satellite based or a cable supplier of television programmes. Similarly, the computer 18 could be realised within its own local area network (LAN), but could equally be realised by a PDA (or cell phone) supporting internet access. The computer-based system 16 further includes a server 20 and an associated data base 22. The server 20 is accessible from the computer 18 and acts to control the functionality offered to a user making use of the computer 18.

The database 22 may include specific authentication and subscription databases 24 and dedicated storage areas 26 for storing information uploaded from computer 18 or otherwise acquired during operation of the system of the present invention.

In relation to a home environment 30, which could be a house or a residential care home, the home environment 30 contains a television 32 that receives, decodes and displays the broadcast television signals 14 in conventional fashion. Rather than terrestrial signals falling incident on an areal 34, the television 32 may include a satellite decoder (and connected dish) or broadband modem to permit watching of satellite or cable television programmes; this is merely an implementation option.

Additionally, the home environment 30 includes an ancillary set-top box 40 that permits the reception of messages 42 initiated from the server 20. The messages 42 may be provided over an air interface (such as a cellular phone 3G interface) or alternatively over a wireline or optical network. The messages may include text and images and, subject to the functionality of the set-top box 40, may prompt an interactive response from a client in the home environment 30.

Turning to FIG. 2, the set-top box includes a decoder and modem 44 that allow for the appropriate decoding of messages 42 and their presentation on the television 32, e.g. through a SCART connector or HDMI cable 46. Additionally, a remote control unit 48 controls (at least) the operation of the set-top box 40; implementation will be readily understood by the skilled addressee. Typically, the remote control will also include a plurality of (but at least one) easily identifiable buttons 50 that are readily discernable from one another, e.g. by colour-coding or by shape. The buttons 50 are preferably large and physically separate from one another to allow easy selection. Of course, this is just an example of a suitable interface and other human computer interfaces (HTI) are equally applicable, such as touch-screens and the like. The buttons 50 are programmed to control functions of the set-top box 40, with these functions including local functions (e.g. "select") for controlling local operation of the set-top box 40 or interactive instructions that are communicated back to the server 20.

An alternative remote control could be realized by alternative interface techniques such as a 'radio dial' style control (similar to 3D Connexion's "SpaceNavigator") that provides a scrolling interface by through a rotating cylindrical interface.

The set-top box may also include local memory (not shown) for caching of received messages or for the permanent storage of messages 42 received from the server 20 (or generated locally, if appropriate). The set-top box is uniquely identifiable through an assigned address, phone number or the like. In this way, client-related messages 42 can be targeted at a specific set-top box 40 belonging to a specific client by using the address or phone number.

Once operational, the set-top box 40 interacts with the television 32 to cause the display of messages 42 received from the server 20. For example, a television programme that is being presented on the television (e.g. through the reception of broadcast television signals 14 or from a local DVD player or the like) will be overlaid by a text or image screen area/screen that is generated by the set-top box 40. The image area/screen 60 can be located anywhere on the display, although it is preferred that it be located along an edge to limit its visual impact. The location of the image/area screen 60 may be user definable and the suggested location is merely an example.

Once invoked, the image area/screen 60 permits the presentation of data in the form of icons, text information, sound, static and moving pictures. Particularly, the image area/screen 60 overlays at least a portion of a picture region 64 of the television 32 and preferably includes icons that are keyed/indexed to the keys 50 on the remote control 48. For example, a text message icon might be in the form of an envelope that is red coloured to indicate that a text messages can be reviewed by pressing the corresponding red button on the remote control 48. Number values (e.g. "1/6") may also be presented adjacent to each icon to indicate the reception or read status of messages received by the set-top box 40 from the server 20. In this case, the "1/6" could signify that the client has received six text messages and have read only one of them. The exact form of representation of the icons and figures is subject to design considerations only and can be varied, as will be understood.

Other icons could include alarms/reminder flags and picture frames that respectively indicate that the client needs to pay attention to the reminder or that pictures/photographs are available for viewing. The number and form of icons is entirely down to choice, although it is preferably that there is a reduced set and that each one has a unique corresponding key on the remote control 48.

Messages 42 are communicated to the set-top box 40 on the instruction of the server 20. The messages are (and particularly the information content is) initially generated at the user's computer 18 by the user and then communicated to the server 20 either for immediate transmission to the set-top box 40 or otherwise for storage and subsequent transmission. In one embodiment, downlink transmission of a message 42 occurs in response to an uplink request generated from the set-top box 40. For example, the user may upload a brief mail message or some digital photographs or a calendar entry for viewing by the client on the television 32.

In one embodiment, the present invention makes use of an XMPP messagingbased solution to communicate between the boxes and the central service at the server 20. This protocol allows dataflow to be bi-directional.

In uploading data to the server 20, the user logs into an internet-based portal where they may select a category of data to transmit (e.g. message or photo or alarm) and then attaches or enters corresponding data into a data field. Additionally, the user confirms the address or phone number of the client's set-top box to effect routing of the data for eventual display of the television 32. The user interface may be structured to use JavaScript that operate to convert augmented HTML into desired HTML.

After the server has received a valid instruction to produce a message 42 for the client's attention, the message is relayed to the set-top box 40 via a suitable communication path, e.g. GPRS messaging via a cellular phone system or via a packet-based internet message. Provided that the set-top box 40 is in an active state (which requires that it merely be turned on), the message 42 is decoded and presented directly on the television by generating icons or other data within the image area-screen. If the set-top box 40 is in an in-active state, the server will retain the message for future transmission. The client can then use the handset 48 to select a particular icon to view the message, picture or information. The content of the message 48 is therefore screened in large scale for easy viewing on the television. Viewing can be with or without the underlying television picture, with the set-top box 40 functionality preferably capable of temporarily forcing the set-top box 40 to become the principle image source for the television 32. As will be understood, for mixed image viewing the set-top box would typically require the use of a DVB-T card (or its functional equivalent, such as a free-sat receiver). Such DVB-T card technology also supports pop up messages and reminders, as will be appreciated. In the alternative, the client may be required to change the input channel on the television.

Preferably, once viewed, the client may again review the received message, either by selecting a channel where such data is retained or by pressing a specific button on the remote control 48, e.g. "family information review" button. The review function is generally selectable.

Therefore, the set-top box 40 operates independently of the television system 12 but makes use of the television 30 to present relevant and generally timely information to the client. The set-top box 40 is, however, responsive to a secondary communication system that is used to communicate the message to the set-top box for display on the television 32. Consequently, since the user's computer 18 controls the form of data and, generally, the timing of its presentation through the client's set-top box 40, the client's potential forgetfulness is mitigated and the user is generally assured that their messages will be viewed whenever the client's television 32 is turned on. In this way, the user can provide pictures of interest to the client, or can send reminders (such as doctor's visits or appointment times or reminders to take a drug) or the user can ask questions or propose visits or shopping lists that will prompt the client to respond either interactively through the set-top box 40 or via traditional communication such as the telephone or by post.

To prevent abuse of the system and the unsolicited sending of information to the client, authentication of the user is preferably required. Authentication may take a number of convention forms, including passwords to access any client-related information and transmit any messages to the client. Additional security may be provided by securing the communications channel between the set-top box 40 and the server 20.

The information content communicated to the client either directly in the message or as a consequence of accessing a message and then having (for example) additional information or downloaded to the set-top box 40 is unlimited in scope and could extend to home shopping provision, health diagnosis functionality, educational course materials, drug information, advertisements as well as personal information pertaining to family and friends, etc.

The functionality of the set-top box of the present invention can be integrated with other similar boxes or directly into televisions. To access media server content and generate a TV output, the underlying set-top box may be implemented using a Linux-based system with Scart-out and Ethernet in, e.g. the MediaMVP platform or the I-Player with USB-modems from British Telecommunications.

As an example of a practical implementation of the system, consider the situation of a family member/carer (the "user") of an elderly care-home resident ("the client").
1. Client turns on the set-top box 40 and is presented with a suitable welcome screen whilst the system initializes.
2. Client views television programming using a standard infrared (IR) remote control and is able to use OSD schedule and channel information display.
3. User can log into a portal at, for example www.serviceprovider.com with their relative's Client Identifier, i.e. the clients name/address.
4. User can send an email with jpeg attachment (e.g. of potentially unrestricted size) to a specific email address for a client. An image pops up as an overlay of the television picture for client to view. Email notification sent to user indicating success.
5. User can create a message using the web portal for their relative. Message is displayed as an overlay on the TV picture for the client.
6. User can upload an image using the web portal for their relative. Image is displayed as an overlay on the TV picture for the client.
7. User can specify an RSS feed using the web portal for their relative. Any update to the feed is then displayed as a message as an overlay of the TV picture for the client to view.

Once the message content has been decoded and displayed on the television, the client is preferably permitted to send a response to the user. Alternatively, the system may optionally be configured to generate an automatic "read/displayed" message that is communicated back to the user to confirm safe receipt of the original message 42. The "read/displayed" message is again sent back over the secondary communication system/link, such as the exemplary 3G link depicted in FIG. 1. Functionality for generating any uplink confirmatory response is embedded within software in the set-top box 40.

The general nature of time-delayed display of the original message 42 means that any confirmatory uplink message can be placed on an independent channel unrelated to the original downlink message 42. Indeed, the confirmatory uplink message can therefore be very small in size and need only provide a cross-reference to the client's account and original message, e.g. time of sending or message number. Upon receipt of the confirmatory message, the server 20 is then able to update its records to reflect the "read/displayed" status of the original message and can itself effect routing of a delivery notice directly to the user 18 (using data in the subscription database), or otherwise the server 20 can store the "read/displayed" status for subsequent retrieval by the user 18 at the user's next authenticated (log-in) session.

In the absence of timely receipt of a confirmatory uplink message by the server (e.g. after a predetermined period that is set between a few minutes and several hours or days), server functionality may be arranged to cause a re-send of the original message to the client (as a reminder) and/or to notify the user of any failure in the delivery/display of the original message 42.

It will, of course, be appreciated that that the above description has been given by way of example only and that modification in detail may be made within the scope of the present invention. For example, the choice of notification protocol is entirely arbitrary, since the invention is designed to integrate messaging functionality from a different communication system into a conventional television for display of messages on a television.

## Claims

1. A communication system including:
a television for receiving and displaying television signals received over a first communication link;
a server located within a computer network, the server arranged to receive a message and to control onward transmission of the message over a second communication link distinct from the first communication link; and
a set-top box coupled to the television and arranged to receive the message over the second communication link, the set-top box including:
a decoder for decoding the message; and
an alert generator for generating on the television an alert indicating the arrival of the message, wherein the alert is independent both of information content in the received television signals and operational control of the television in displaying television services.

2. The communication system of claim 1, wherein the set-top box is arranged to display the alert simultaneously with the received television signal.

3. The communication system of claim 1 or 2, wherein the message provides access to media content unrelated to the received television signals.

4. The communication system of claim 1, 2 or 3, wherein the alert further indicates a type of media content present in the message.

5. The communication system of any preceding claim, wherein the set-top box renders the alert selectable to permit the viewing of data associated with the message.

6. A television and set-top box combination, the television arranged to receive and display television signals from a television network and wherein the set-top box includes:
a first interface providing signals to the television for display on the television;
a second interface coupled, in use, to a communication network distinct to the television network, the communication network supporting the transmission of messages to the set-top box;
a decoder for decoding the messages; and
an alert generator for generating on the television an alert indicating the arrival of messages, wherein the alert is independent of information content in the received television signals.

7. The television and set-top box combination of claim 6, wherein the set-top box is arranged to display the alert simultaneously with the received television signal.

8. The television and set-top box combination of claim 6 or 7, wherein the messages provide access to media content unrelated to the received television signals.

9. The television and set-top box combination of claim 6, 7 or 8, wherein the alert further indicates a type of media content present in the messages.

10. The communication system of claims 6 to 9, wherein the set-top box renders the alert selectable to permit the viewing of data associated with the message.
